# EUROPEAN PATENT APPLICATION

(11) **EP 2 453 079 A1**
(43) Date of publication of application: **16.05.2012**
(21) Application number: 11157107.1
(22) Date of filing: 05.03.2011
(51) Int. Cl.: E04H 5/04, F02B 63/04, H02B 7/06

(54) **Housing for generator engine**

(30) Priority: 10.11.2010 TR 201009355
(71) Applicant: Polisac metal Makine Petrol Ürünleri Sanayi ve Ticaret Anonim Sirketi, 35640 Izmir (TR)
(72) Inventor: Susuz, Mehmet, Çigli Izmir (TR)
(74) Representative: Iskender, Ibrahim

(57) **Abstract**

Housing for generator engines comprising a group (1) formed of a cabin and a lower chassis (40), the cabin comprising a fixed cap (30) connected to the lower chassis (40) and two pivotable caps (10) and (20) which are connected either to the fixed cap (30), either to the lower chassis (40) and provide complete closure of the housing in their closed position.

## Description

The invention relates to generator cabin and chassis group with body shock absorber wherein the generator engines are placed.

The invention particularly relates to the cabin and chassis group, which is used as mounting and protection cabin wherein generator engines are used, and which comprises lower chassis on it, wherein the generator engine is positioned, and it comprises fixed cap connected to the lower chassis via connection means and providing complete closure of the said cabin and chassis group while the radiator cap and the alternator cap are in closed position, radiator cap positioned at the side where the generator engine radiator is placed, connected with the fixed cap or the lower chassis via connection components, and on its front surface, having the louver providing discharging of the heated air, and alternator cap, positioned at the side where the generator engine alternator is placed, connected with the fixed cap or the lower chassis via the connection component, and on its side surfaces, having intake air ducts with internal surfaces suitable for sound insulation.

### The Prior Art

After mounting of generator engines to the cabin, their maintenance and repair works have to be done in certain intervals. In the cabin and chassis found in the prior art, the cap parts are quite narrow. Therefore, during the maintenance and repair works, it is quite difficult to reach all over the generator engines because of the said narrowness.

Moreover, in the prior art, intake air ducts found in cabins can not insulate sound.

In the prior art, because of the forms of the louver boards of the louvers used for discharging the heated air, it is not possible to completely discharge the heated air.

As a result, the above said drawbacks and the inadequacy of the prior solutions about the subject have necessitated improvement in the related technical field.

### Purpose of the Invention

The invention is formed by being inspired from the prior art and aims to solve the above said problems.

The purpose of the invention is to facilitate maintenance and repair works.

Another purpose of the invention is to provide a cabin and chassis group comprising caps with shock absorbers, which facilitate maintenance and repair works by ensuring access all over the generator engines placed in it.

Another purpose of the invention is to provide a cabin and chassis group, which becomes quite useful via mounting of the caps after fitting of the generator engine into the lower chassis.

Another purpose of the invention is to prevent sound leak by designing of the intake air duct internal surfaces in a way that they are suitable for insulation.

Another purpose of the invention is to prevent returning of the heated air found inside the cabin and thus to provide easy discharge of the heated air via the louver boards formed in "S"-shape.

Another purpose of the invention is to provide easy and quick implementation of the first maintenance works and the later maintenance works of the generator.

Another purpose of the invention is to provide expansion of the working area of workers by automatic fixing of the caps when the caps are lifted up via using shock absorber between the radiator and alternator caps and the fixed cap.

Another purpose of the invention is to provide expansion of the working area of workers by automatic fixing of the caps when the caps are opened sideways via using shock absorber between the radiator and alternator caps and the fixed cap.

Another purpose of the invention is to provide ease of installation and service.

In order to achieve the above said purposes, the invention is the cabin and chassis group, which is used as mounting and protection cabin wherein generator engines are used, and which comprises lower chassis on it, wherein the generator engine is positioned, and it comprises:
- fixed cap, connected to the lower chassis via connection means and providing complete closure of the said cabin and chassis group while the radiator cap and the alternator cap is in closed position,
- radiator cap, positioned at the side where the generator engine radiator is placed, connected with the fixed cap or the lower chassis via connection components, and on its front surface, having the louver providing discharging of the heated air, and
- alternator cap, positioned at the side where the generator engine alternator is placed, connected with the fixed cap or the lower chassis via the connection component, and on its side surfaces, having intake air ducts with internal surfaces suitable for sound insulation.

The structural and characteristic features of the invention and all advantages will be understood better in detailed descriptions with the figures given below and with reference to the figures, and therefore, the assessment should be made taking into account the said figures and detailed explanations.

### Figures for Better Understanding of the Invention

**Figure 1a****:** is the two dimensional side view of the cabin and chassis group (1) of the invention, while the caps (10, 20) are in open position.
**Figure 1b**: is the two dimensional side view of the cabin and chassis group (1) of the invention, while the caps (10, 20) are in closed position.
**Figure 2a****:** is the perspective top view of the cabin and chassis group (1) of the invention, while the caps (10, 20) are in open position.
**Figure 2b****:** is the perspective top view of the cabin and chassis group (1) of the invention, while the caps (10, 20) are in closed position.
**Figure 3a****:** is another perspective top view of the cabin and chassis group (1) of the invention, while the caps (10, 20) are in open position.
**Figure 3b****:** is another perspective top view of the cabin and chassis group (1) of the invention, while the caps (10, 20) are in closed position.
**Figure 4a****:** is the perspective bottom view of the cabin and chassis group (1) of the invention, while the caps (10, 20) are in open position.
**Figure 4b****:** is the perspective bottom view of the cabin and chassis group (1) of the invention, while the caps (10, 20) are in closed position.
**Figure 5a****:** is a perspective top view of the radiator cap (10).
**Figure 5b****:** is a two dimensional front view of the radiator cap (10)
**Figure 5c****:** is a two dimensional side view of the radiator cap (10)
**Figure 5d****:** is a perspective bottom view of the radiator cap (10)
**Figure 5e****:** is a perspective top view of the louver (15).
**Figure 6a****:** is a perspective bottom view of the alternator cap (20).
**Figure 6b****:** is a two dimensional front view of the alternator cap (20).
**Figure 6c****:** is another perspective bottom view of the alternator cap (20).
**Figure 7a****:** is a perspective top view of the fixed cap (30).
**Figure 7b****:** is a perspective bottom view of the fixed cap (30).
**Figure 8a****:** is a perspective top view of the lower chassis (40).
**Figure 8b****:** is a two dimensional top view of the lower chassis (40).
**Figure 8c****:** is a two dimensional side view of the lower chassis (40).
**Figure 9a****:** is the two dimensional demounted side view of the cabin and chassis group (1) of the invention.
**Figure 9b****:** is the two dimensional demounted top view of the cabin and chassis group (1) of the invention.
**Figure 10a****:** is the two dimensional side view of an alternative embodiment of the cabin and chassis group (1) of the invention, while the caps (10, 20) are in open position.
**Figure 10b****:** is the perspective top view of the fixed cap (30) in an alternative embodiment of the cabin and chassis group (1) of the invention.
**Figure 10c****:** is the perspective bottom view of the fixed cap (30) in an alternative embodiment of the cabin and chassis group (1) of the invention.
**Figure 11a****:** is the perspective top view of an alternative embodiment of the cabin and chassis group (1) of the invention, while the caps (10, 20) are in open position.
**Figure 11b****:** is the perspective top view of an alternative embodiment of the cabin and **chassis group** (1) of the invention, while the caps (10, 20) are in closed position.
**Figure 12a****:** is another perspective top view of an alternative embodiment of the cabin and chassis group (1) of the invention, while the caps (10, 20) are in open position.
**Figure 12b****:** is another perspective top view of an alternative embodiment of the cabin and chassis group (1) of the invention, while the caps (10, 20) are in closed position.

### Description of the Parts References

- 1.: Cabin and chassis group
- 2.: Generator engine
- 10.: Radiator cap
- 11.: Side surface
- 12.: Upper surface
- 13.: Front surface
- 14.: Protrusion 15. Louver 16. Louver board
- 20.: Alternator cap
- 21.: Side surface
- 22.: Upper surface
- 23.: Front surface
- 24.: Protrusion
- 25.: Emergency stop button housing
- 26.: Intake air ducts
- 27.: Internal surface
- 28.: Emergency stop button
- 30.: Fixed cap
- 31.: Front surface
- 32.: Rear surface
- 33.: Upper surface
- 34.: Protrusion
- 40.: Lower chassis
- 41.: External surface
- 42.: Engine mounting rail
- 43.: Mounting apparatus
- 44.: Holding component
- 45.: Upper surface
- 46.: Locking spaces
- 50.: Connection components
- 60.: Shock absorber 70. Lock
- 80.: Sealing
- 81.: Sealing retainer

Drawings do not have to be scaled and details not necessary for understanding the present invention may be neglected. Moreover, components which are at least widely equal or which have at least widely equal functions are shown with the same number.

### Detailed Description of the Invention

In this detailed description, the preferred embodiments of the generator cabin and chassis group (1) with body shock absorber, which is the subject of the invention, will only be disclosed for better understanding of the subject, and will not form any limiting effect.

The invention is the cabin and chassis group (1), which is used as mounting and protection cabin wherein generator engines (2) are used, and which comprises lower chassis (40) on it, wherein the generator engine (2) is positioned, and it comprises:
- fixed cap (30) connected to the lower chassis (40) via connection means and providing complete closure of the said cabin and chassis group (1) while the radiator cap (10) and the alternator cap (20) are in closed position,
- radiator cap (10) positioned at the side where the generator engine (2) radiator is placed, connected with the fixed cap (30) or the lower chassis (40) via connection components (50), and on its front surface (31), having the louver (15) providing discharging of the heated air, and
- alternator cap (20), positioned at the side where the generator engine (2) alternator is placed, connected with the fixed cap (30) or the lower chassis (40) via the connection component (50), and on its side surfaces (21), having intake air ducts (26) with internal surfaces (27) suitable for sound insulation.

Said connection component (50) is preferably hinge (50).

Said connection component (50) is preferably positioned on the protrusions (34) formed as extensions of the upper surface (33) of the said cap (30) and thus connects said radiator cap (10) and the alternator cap (20) with the fixed cap (30).

In the alternative embodiment of the cabin and chassis group (1), said connection component (50) is positioned on the lower chassis (30) upper surface (33) and thus connects the said radiator cap (10) and the alternator cap (20) with the lower chassis (40).

Cabin and chassis group (1) preferably comprises engine mounting rail (42) positioned in the said lower chassis (40) and mounting apparatus (43), which provides every generator engine (2) be positioned on the lower chassis (40) by being placed on the said mounting rail (42), and which can be adjusted according to the distance between the generator engine (2) feet.

Cabin and chassis group (1) preferably comprises shock absorbers (60), one end of which is connected to the fixed cap (30), while the other end is connected to the alternator cap (20) and the radiator cap (10), which provide the said radiator cap (10) and the said alternator cap (20) be automatically fixed at the top when the said radiator cap (10) and the alternator cap (20) are lifted up, and which provide the said radiator cap (10) and the alternator cap (20) be fixed at the sides when the said radiator cap (10) and the alternator cap (20) are opened sideways.

Cabin and chassis group (1) preferably comprises sealing retainer (81) fixed on the said lower chassis (40) and sealing (80) providing impermeability by being applied over the said sealing retainer (81).

Cabin and chassis group (1) preferably comprises louvers (15) comprising louver boards (16) having "S"-shaped section.

Cabin and chassis group (1) preferably comprises locking spaces (46) positioned on the lower chassis (40) upper surface (45) and providing locking of the said radiator cap (10) and the alternator cap (20) to the lower chassis (40) and locks (70) positioned on the front surfaces (13, 23) of the said radiator cap (10) and the alternator cap (20).

The main parts of the cabin and chassis group (1) with body shock absorber, which is the subject of the invention, are the radiator cap (10), alternator cap (20), fixed cap (30), and the lower chassis (40). In the preferred embodiment of the invention, the radiator cap (10) and the alternator cap (20) are connected to the fixed cap (30) via shock absorbers (60). Via the said caps (10, 20), no inaccessible region is left in the generator engine (2) during the maintenance and repair works. Except the maintenance and repair works of the generator engine (2), the caps (10, 20) are connected with the lower chassis (40) through the locks (70) placed at their front surfaces (13, 23) being locked after getting into the locking spaces (46) placed on the lower chassis (40) upper surface (45).

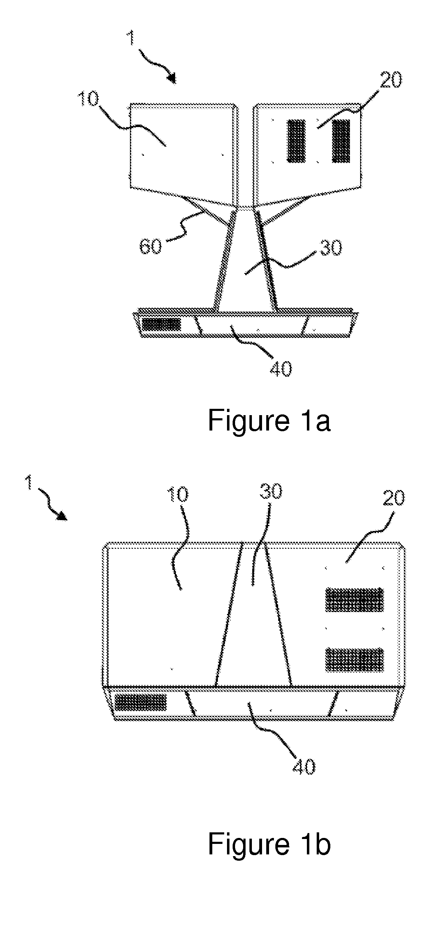

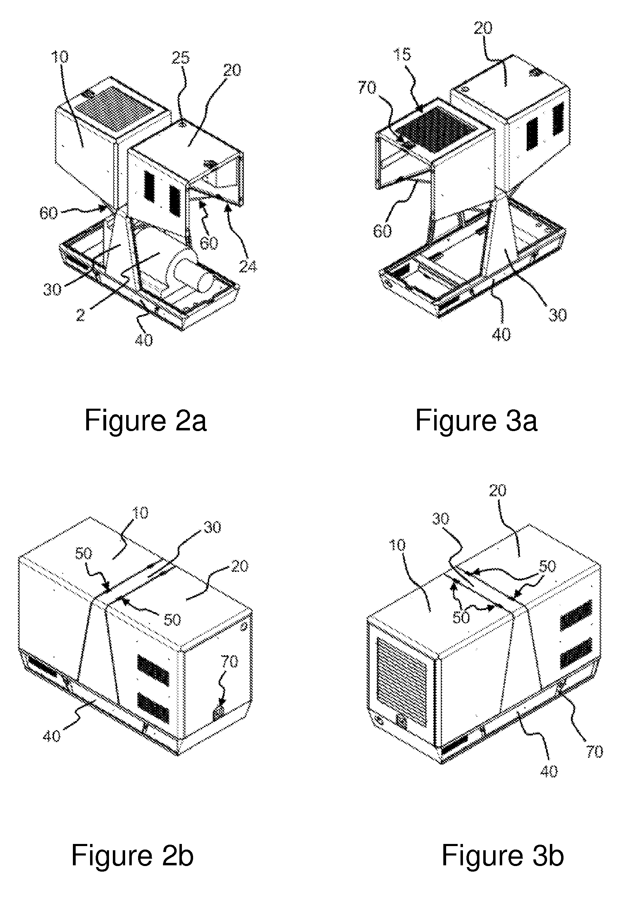

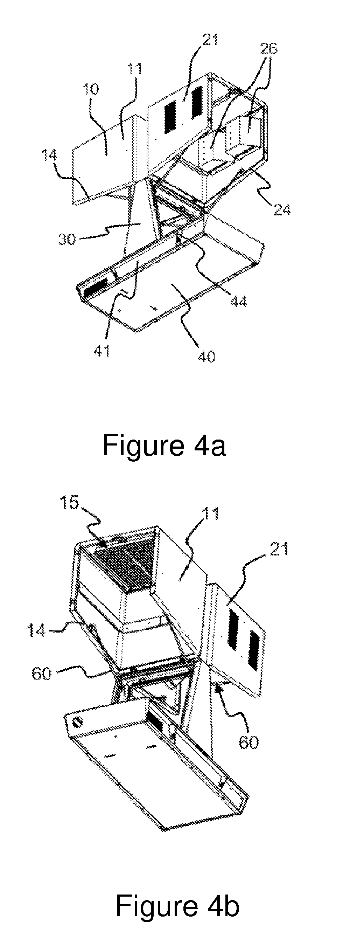

In Figure 1a, figure 2a, and figure 3a, the views of the cabin and chassis group (1) of the invention are given, while the radiator cap (10) and the alternator cap (20) are in open position. Radiator cap (10) and alternator cap (20) are connected to the fixed cap (30) via the shock absorbers (60) over the protrusions (14, 24) formed as the extensions of the side surfaces (11, 21) and via the connection components (50) over the protrusions (14, 24) formed as the extensions of the upper surfaces (12, 22) of the said caps (10, 20). Preferably hinge (50) is used as the connection component (50). Here, the task of the shock absorbers (60) is to fix the caps (10, 20) automatically when the caps (10, 20) are lifted up and to prevent any possible problem due to falling of the caps (10, 20) during the maintenance works (Figure 4a, Figure 4b).

In Figure 1b, figure 2b, and figure 3b, the views of the cabin and chassis group (1) of the invention are given, while the radiator cap (10) and the alternator cap (20) are in closed position. Caps (10, 20) are locked to the lower chassis (40) via the locks (70) positioned on their front surfaces (13, 23) in their closed position.

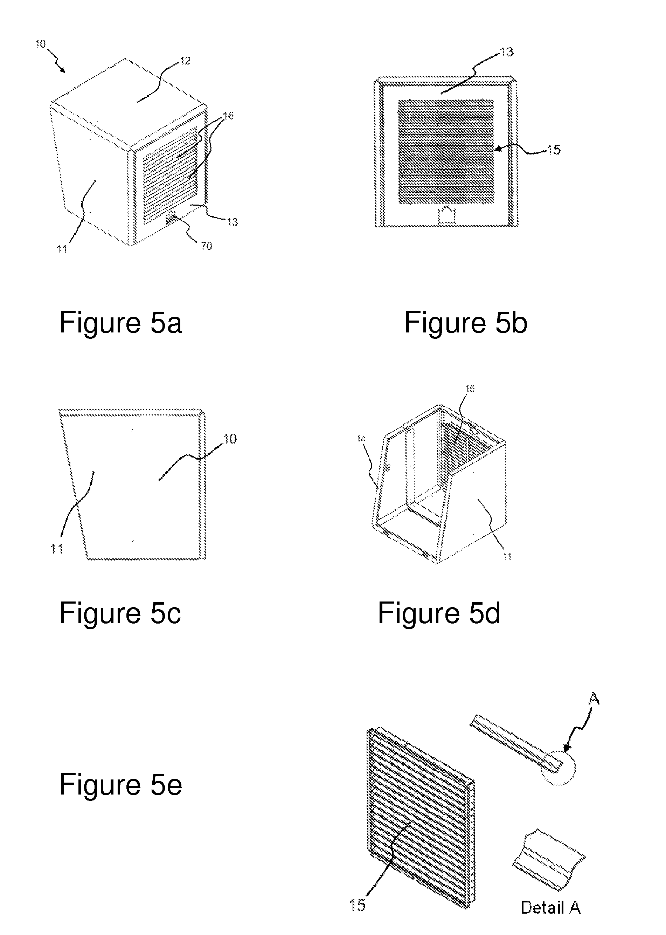

In Figure 5a, a perspective top view of the radiator cap (10) is given. Louver (15) is found at the front surface (13) of the radiator cap (10) (Figure 5e). In the preferred embodiment of the invention, the louver (15) comprises "S"-shaped sectioned louver boards (16) (Figure 5e-detail A). Thanks to this form of the louver boards (16), return of the heated air is prevented and the heated air is easily discharged.

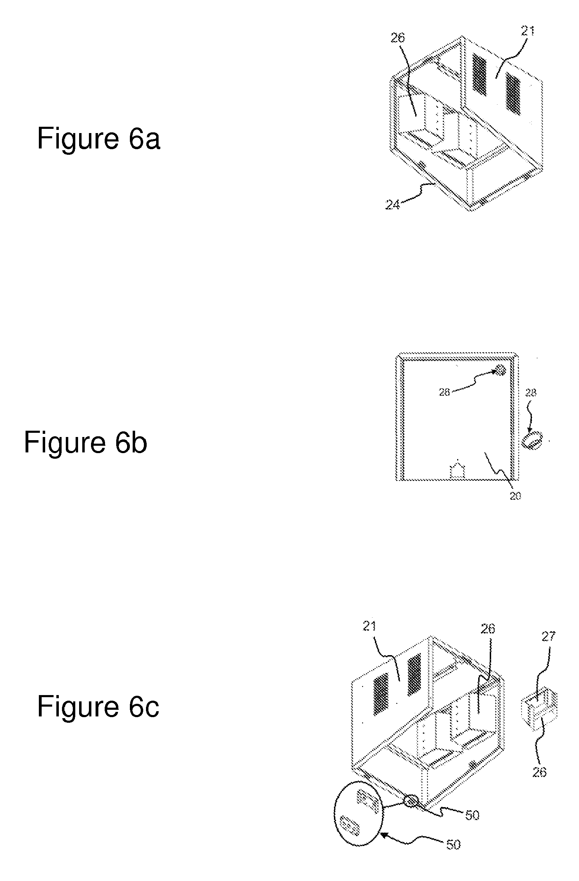

In Figure 6a, a perspective bottom view of the alternator cap (20) is given. Emergency stop button housing (25), wherein the emergency stop button (28) is placed, is found at the alternator cap (20) front surface (31), while the intake air ducts (26) are positioned in its side surface (21). Leak of sound is prevented by designing the internal surfaces (27) of the intake air ducts (26) in a way that they are suitable for insulation.

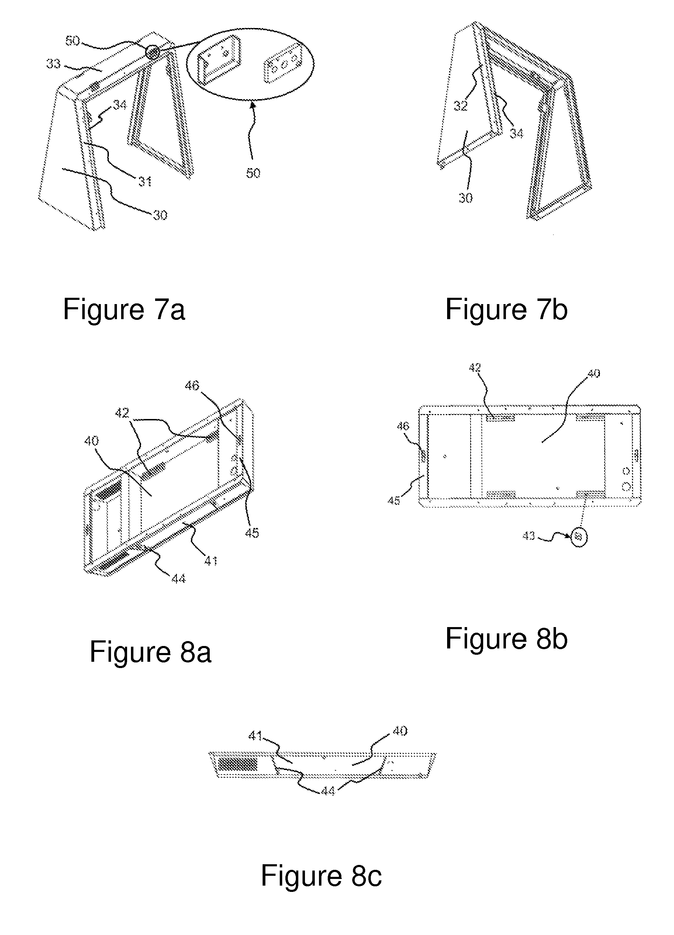

In Figure 7a, a perspective top view of the fixed cap (30) is given. Protrusions (34), on which the sealing (80) is to be positioned to provide impermeability, are formed at the front surface (31) and the rear surface (32) of the fixed cap (30). Moreover, the shock absorbers (60) are also connected to these protrusions (34). The hinges (50), which provide connection with the radiator cap (10) and the alternator cap (20), are also connected between the front surface (31) and the rear surface (32) and the upper surface (33) of the said cap (30).

In Figure 8b, a two dimensional top view of the lower chassis (40) is given. The engine mounting rail (42) and the mounting apparatus (43) for fixing the feet of the generator engine (2) to be fitted on this mounting rail (42) are placed in the lower chassis (40). Since the distances between the feet of generator engines (2) are not standard, convenient points are determined on the engine mounting rail (42) for every generator engine (2) and then fixations are made via mounting apparatus (43). In this way, mounting of different types and models of generator engines (2) are easily made. Holding components (44) are welded at the edges of the lower chassis (40) for providing the lifting operation on the external surface (41) in accordance with the edge angles. Preferably eyebolt (44) is used as the holding component.

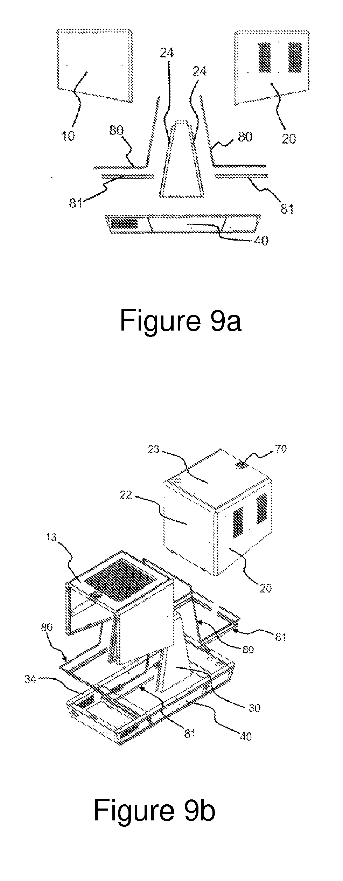

In Figure 9a, the two dimensional demounted view of the cabin and chassis group (1) of the invention is given. Fixed cap (30) is connected to the lower chassis (40) via bolts. As mentioned above, sealing (80) is connected to the fixed cap (30) through the protrusions (34). Before applying sealing (80) on the lower chassis (40), sealing retainer (81) is fixed on the lower chassis (40) via bolts. Afterwards, sealing is applied on the protrusions (34) formed on the fixed cap (30) and the sealing retainer (81) fixed on the lower chassis (40) and thus sealing is obtained.

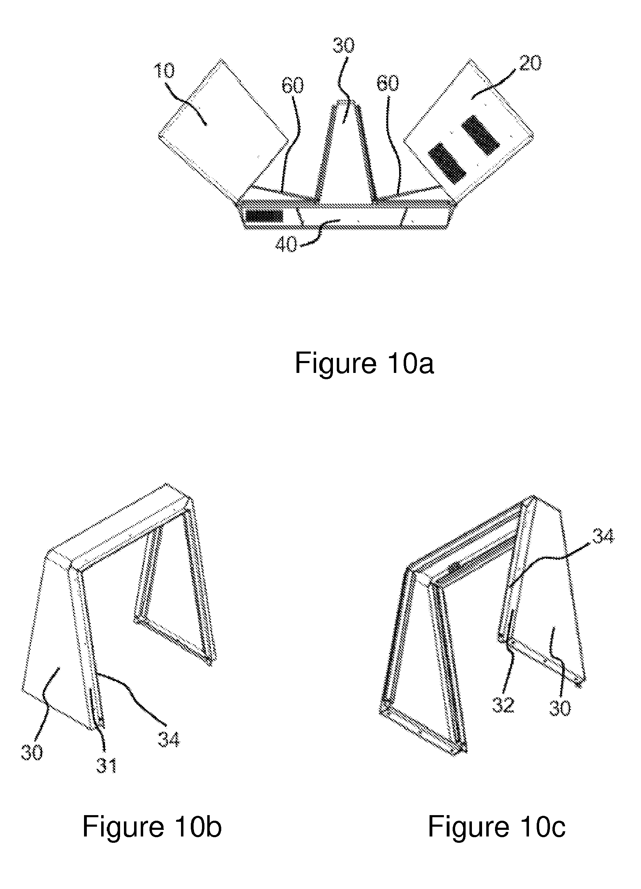

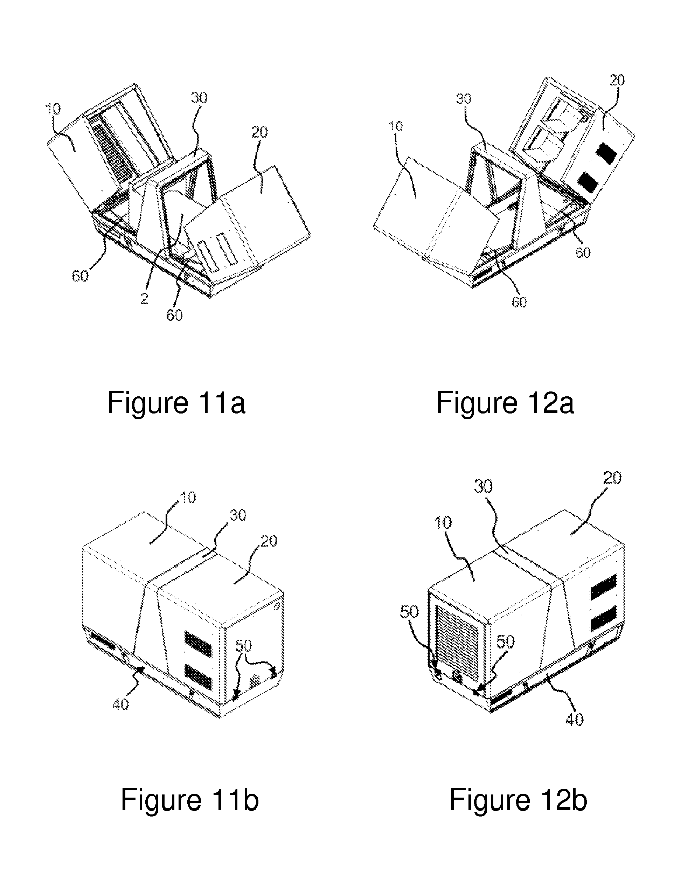

Two dimensional side view of an alternative embodiment of the cabin and chassis group (1) of the invention, while the caps (10, 20) are in open position, is given in Figure 10a. In the preferred embodiment, radiator cap (10) and alternator cap (20) are connected to the lower chassis (40) via the hinges (50) over the protrusions (14, 24) connected to the front surfaces (13, 23) of the said caps (10, 20) and to the fixed cap (30) via the shock absorbers (60) over the protrusions (14, 24) formed as the extension of the side surfaces (11, 21) of the said caps (10, 20) (Figure 11b, figure 12b). Here, the task of the shock absorbers (60) is to automatically fix the caps (10, 20) when the caps (10, 20) are opened sideways and to prevent occurrence of any problem due to falling of the caps (10, 20) towards the sides during the maintenance works (Figure 11a, figure 12a).

The components forming the cabin and chassis group (1) of the invention are preferably produced in laser cutting machine by using first class materials with zero error. Parts forming the cabin and chassis group (1) are cut via burr-free cutting method and unified by bending and welding operation in first class cnc bending machines. Sealing is obtained around the lower chassis (40) via robot welding. After welding, impermeability test is made with pressurized air around the tank. Ease of production is achieved since cabin body parts are formed of three main parts, which are the radiator cap (10), the alternator cap (20), and the fixed cap (30). Welding surfaces of the parts are levelled after welding operation and thus surface smoothness of the parts is achieved. Surfaces of the parts can be cleaned by using sanding, iron phosphate, or zinc phosphate arbitrarily before painting. They can also be painted in the desired colour again arbitrarily by electrostatic powder paint or wet paint. Products are also suitable for foam rubber or rock wool insulation after painting.

## Claims

1. The invention is the cabin and chassis group (1), which is used as mounting and protection cabin wherein generator engines (2) are used, and which comprises lower chassis (40) on it, wherein the generator engine (2) is positioned, and it is **characterized in that**; it comprises:
- fixed cap (30) connected to the lower chassis (40) via connection means and providing complete closure of the said cabin and chassis group (1) while the radiator cap (10) and the alternator cap (20) are in closed position,
- radiator cap (10) positioned at the side where the generator engine (2) radiator is placed, connected with the fixed cap (30) or the lower chassis (40) via connection components (50), and on its front surface (31), having the louver (15) providing discharging of the heated air, and
- alternator cap (20), positioned at the side where the generator engine (2) alternator is placed, connected with the fixed cap (30) or the lower chassis (40) via the connection component (50), and on its side surfaces (21), having intake air ducts (26) with internal surfaces (27) suitable for sound insulation.

2. Cabin and chassis group (1) according to Claim 1, and it is **characterized in that**; the said connection component (50) is hinge.

3. Cabin and chassis group (1) according to any one of the above claims, and it is **characterized in that**; said connection component (50) is positioned on the protrusions (34) formed as extensions of the upper surface (33) of the fixed cap (30) and thus connects said radiator cap (10) and the alternator cap (20) with the fixed cap (30).

4. Cabin and chassis group (1) according to any one of the above claims, and it is **characterized in that**; said connection component (50) is positioned on the lower chassis (30) upper surface (33) and thus connects the said radiator cap (10) and the alternator cap (20) with the lower chassis (40).

5. Cabin and chassis group (1) according to any one of the above claims, and it is **characterized in that**; it comprises engine mounting rail (42) positioned in the said lower chassis (40) and mounting apparatus (43) which provides every generator engine (2) be positioned on the lower chassis (40) by being placed on the said mounting rail (42) and which can be adjusted according to the distance between the generator engine (2) feet.

6. Cabin and chassis group (1) according to any one of the above claims, and it is **characterized in that**; it comprises shock absorbers (60), one end of which is connected to the fixed cap (30), while the other end is connected to the alternator cap (20) and the radiator cap (10), which provide the said radiator cap (10) and the said alternator cap (20) be automatically fixed at the top when the said radiator cap (10) and the alternator cap (20) are lifted up, and which provide the said radiator cap (10) and the alternator cap (20) be fixed at the sides when the said radiator cap (10) and the alternator cap (20) are opened sideways.

7. Cabin and chassis group (1) according to any one of the above claims, and it is **characterized in that**; it comprises sealing retainer (81) fixed on the said lower chassis (40) and sealing (80) providing impermeability by being applied over the said sealing retainer (81 ).

8. Cabin and chassis group (1) according to any one of the above claims, and it is **characterized in that**; said louvers (15) comprise louver boards (16) having "S"-shaped section.

9. Cabin and chassis group (1) according to any one of the above claims, and it is **characterized in that**; it comprises locking spaces (46) positioned on the lower chassis (40) upper surface (45) and providing locking of the said radiator cap (10) and the alternator cap (20) to the lower chassis (40) and locks (70) positioned on the front surfaces (13, 23) of the said radiator cap (10) and the alternator cap (20).
